# EUROPEAN PATENT APPLICATION

(11) **EP 4 678 786 A1**
(43) Date of publication of application: **14.01.2026**
(21) Application number: 25779717.5
(22) Date of filing: 15.05.2025
(51) Int. Cl.: C23C 22/00, B23K 26/36, C23F 1/00

(54) **GRAIN-ORIENTED ELECTRICAL STEEL SHEET WITH ETCHING RESIST COATING FILM AND METHOD FOR PRODUCING GRAIN-ORIENTED ELECTRICAL STEEL SHEET**

(30) Priority: 16.05.2024 WO PCT/JP2024/018228
(71) Applicant: JFE STEEL CORPORATION, Tokyo 100-0011 (JP)
(72) Inventor: NAKAGAWA, Nobuko, Tokyo 1000011 (JP); MURAMATSU, Naoki, Tokyo 1000011 (JP); TADA, Chiyoko, Tokyo 1000011 (JP)
(74) Representative: Haseltine Lake Kempner LLP
(86) International application number: PCT/JP2025/017780
(87) International publication number: WO 2025/239438

(57) **Abstract**

Provided is a method of producing a grain-oriented electrical steel sheet including an etching resist coating that has an excellent resist property and removability, and an etching resist coated grain-oriented electrical steel sheet using the etching resist coating. The method of producing a grain-oriented electrical steel sheet includes: applying a coating agent for etching resist coating formation to a surface of a specified steel sheet selected from the group consisting of a hot-rolled steel sheet, a hot-rolled annealed steel sheet, a cold-rolled steel sheet, a primary recrystallization annealed steel sheet, and a secondary recrystallization annealed steel sheet, leaving a plurality of non-coated regions where the coating agent for etching resist coating formation is not applied linearly along a direction intersecting the rolling direction of the specified steel sheet; then applying a baking treatment to the specified steel sheet to bake the coating agent for etching resist coating formation to form an etching resist coating; and then applying an etching treatment to the specified steel sheet to form grooves on the surface of the specified steel sheet in the non-coated regions. The etching resist coating has a surface insulation resistance coefficient of 20 Ω·cm²/sheet or more and a pencil hardness of H or more and 8H or less.

## Description

### TECHNICAL FIELD

The present disclosure relates to an etching resist coated grain-oriented electrical steel sheet and a method of producing a grain-oriented electrical steel sheet.

### BACKGROUND

Grain-oriented electrical steel sheets have excellent magnetic properties and are therefore primarily used as material for the iron cores of transformers. There is demand for a decrease in the iron loss of grain-oriented electrical steel sheets, in order to improve the energy efficiency of transformers. One method known for decreasing the iron loss of a grain-oriented electrical steel sheet is to introduce linear grooves into the surface of the grain-oriented electrical steel sheet. In this method, linear grooves are formed on the surface of the grain-oriented electrical steel sheet to subdivide the width of magnetic domains, thereby decreasing the iron loss.

One method of forming linear grooves on the surface of a grain-oriented electrical steel sheet is known to be an etching treatment using an etching resist coating. For example, Patent Literature (PTL) 1 describes a method of forming linear grooves on the surface of a grain-oriented electrical steel sheet by applying a coating agent for etching resist coating formation to the surface of the grain-oriented electrical steel sheet while leaving continuous or discontinuous linear regions in a direction intersecting the rolling direction as non-coated regions, carrying out a baking treatment, and then carrying out an etching treatment. PTL 2 describes a method in which a cold-rolled sheet that is not necessarily flat is coiled around a roller surface, and a coating agent for etching resist coating formation is applied while adjusting the shape of the cold-rolled sheet, thereby correctly leaving the above-described non-coated regions and decreasing variation in the shape of linear grooves formed by the etching treatment.

### CITATION LIST

### Patent Literature

PTL 1: JP H04-88121 A
PTL 2: JP H06-108300 A

### SUMMARY

### (Technical Problem)

As a result of their own investigations, the inventors have discovered that there is room for improvement in the characteristics of the etching resist coating formed on the surface of a grain-oriented electrical steel sheet according to the above-mentioned conventional technology. Specifically, when electrolytic etching is carried out using an etching resist coating according to conventional technology, there are cases where a portion of the surface of the etching resist coating is discolored, causing a change in appearance. The change in color tone of the etching resist coating suggests that the resistance of the etching resist coating to the electrolytic etching solution (hereinafter, sometimes referred to as "resist property") has decreased.

Further, according to conventional technology, when using a strong alkaline aqueous solution to strip and remove an etching resist coating that is no longer needed after the etching treatment is completed, there have been cases where a portion of the etching resist coating does not strip off and remains on the surface of the grain-oriented electrical steel sheet. The remaining etching resist coating suggests that the ease of removal of the etching resist coating (hereinafter, sometimes referred to as "removability") is poor.

The present disclosure has been made in view of the above-mentioned problems associated with conventional technology. It would be helpful to provide a method of producing a grain-oriented electrical steel sheet using an etching resist coating that has an excellent resist property and removability, and an etching resist coated grain-oriented electrical steel sheet.

### (Solution to Problem)

Primary features of the present disclosure are as follows.
[1] A method of producing a grain-oriented electrical steel sheet, the method comprising:
   a process of hot rolling a steel slab to obtain a hot-rolled steel sheet;
   an optional process of hot-rolled sheet annealing the hot-rolled steel sheet to obtain a hot-rolled annealed steel sheet;
   a process of cold rolling the hot-rolled steel sheet or the hot-rolled annealed steel sheet once or two or more times with intermediate annealing therebetween to obtain a cold-rolled steel sheet;
   a process of primary recrystallization annealing the cold-rolled steel sheet to obtain a primary recrystallization annealed steel sheet;
   a process of secondary recrystallization annealing the primary recrystallization annealed steel sheet to obtain a secondary recrystallization annealed steel sheet;
   a process of applying a coating agent for etching resist coating formation to a surface of a specified steel sheet selected from the group consisting of the hot-rolled steel sheet, the hot-rolled annealed steel sheet, the cold-rolled steel sheet, the primary recrystallization annealed steel sheet, and the secondary recrystallization annealed steel sheet, and at that time, leaving a plurality of non-coated regions where the coating agent for etching resist coating formation is not applied linearly along a direction intersecting the rolling direction of the specified steel sheet;
   a subsequent process of applying a baking treatment to the specified steel sheet to bake the coating agent for etching resist coating formation to form an etching resist coating; and
   a subsequent process of applying an etching treatment to the specified steel sheet to form grooves on the surface of the specified steel sheet in the non-coated regions, wherein
   the etching resist coating has a surface insulation resistance coefficient of 20 Ω·cm²/sheet or more and a pencil hardness of H or more and 8H or less.
[2] The method of producing a grain-oriented electrical steel sheet according to [1], above, further comprising a process of removing the etching resist coating after the etching treatment.
[3] An etching resist coated grain-oriented electrical steel sheet comprising:
   a grain-oriented electrical steel sheet;
   an etching resist coating formed on at least one surface of the grain-oriented electrical steel sheet;
   a plurality of non-coated regions where the etching resist coating is not applied, the non-coated regions being linear along a direction intersecting the rolling direction of the grain-oriented electrical steel sheet; and
   grooves formed on a surface of the grain-oriented electrical steel sheet in the non-coated regions, wherein
   the etching resist coating has a surface insulation resistance coefficient of 20 Ω·cm²/sheet or more and a pencil hardness of H or more and 8H or less.

### (Advantageous Effect)

According to the present disclosure, it is possible to provide a method of producing a grain-oriented electrical steel sheet using an etching resist coating that has an excellent resist property and removability, and an etching resist coated grain-oriented electrical steel sheet.

### BRIEF DESCRIPTION OF THE DRAWINGS

In the accompanying drawings:

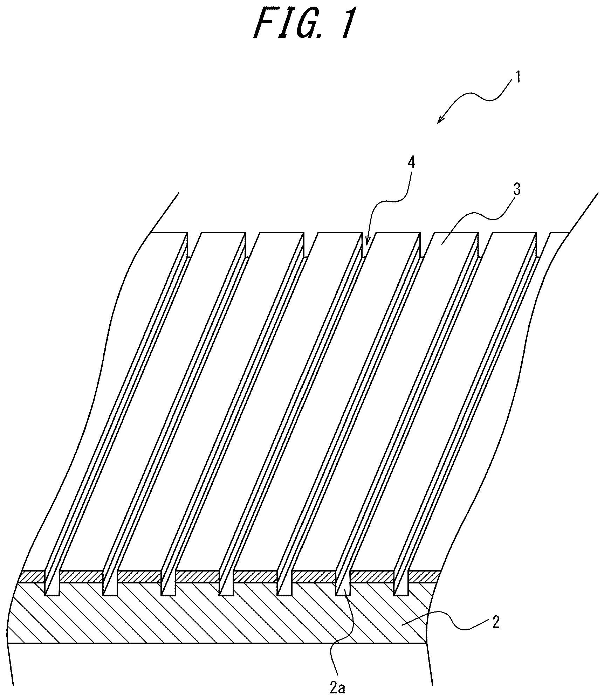

FIG. 1 is a perspective view diagram illustrating an etching resist coated grain-oriented electrical steel sheet according to the present disclosure.

### DETAILED DESCRIPTION

A detailed description is provided below.

### <Etching resist coated grain-oriented electrical steel sheet>

According to an embodiment, an etching resist coated grain-oriented electrical steel sheet includes: a grain-oriented electrical steel sheet; an etching resist coating formed on at least one surface of the grain-oriented electrical steel sheet; a plurality of non-coated regions where the etching resist coating is not applied, the non-coated regions being linear along a direction intersecting the rolling direction of the grain-oriented electrical steel sheet; and grooves formed on a surface of the grain-oriented electrical steel sheet in the non-coated regions. The etching resist coating has a surface insulation resistance coefficient of 20 Ω·cm²/sheet or more and a pencil hardness of H or more and 8H or less.

FIG. 1 is a perspective view diagram illustrating the etching resist coated grain-oriented electrical steel sheet according to the present embodiment. As illustrated in FIG. 1, the etching resist coated grain-oriented electrical steel sheet 1 according to the present embodiment includes the grain-oriented electrical steel sheet 2 and the etching resist coating 3 formed on at least one surface of the grain-oriented electrical steel sheet 2. According to the present embodiment, "etching resist coating" refers to a solid coating formed on a surface of a grain-oriented electrical steel sheet by applying a coating agent for etching resist coating formation to the surface of the grain-oriented electrical steel sheet and then applying a baking treatment at a defined temperature for a defined time to evaporate solvent and cause a crosslinking reaction. During etching treatment, in a region protected by the etching resist coating 3, contact between the surface of the grain-oriented electrical steel sheet 2 and an etching solution is inhibited, and corrosion of the grain-oriented electrical steel sheet 2 does not occur. In FIG. 1, the etching resist coating 3 is formed on one surface of the grain-oriented electrical steel sheet 2, but the etching resist coating 3 may be provided on both surfaces of the grain-oriented electrical steel sheet 2.

As illustrated in FIG. 1, the etching resist coated grain-oriented electrical steel sheet 1 according to the present embodiment has a plurality of non-coated regions 4 that are not coated with the etching resist coating and are arranged linearly along a direction intersecting the rolling direction of the grain-oriented electrical steel sheet 2. According to the present embodiment, the direction of the linear non-coated regions 4 is not parallel with the rolling direction and is a direction intersecting the rolling direction. In FIG. 1, the rolling direction of the grain-oriented electrical steel sheet 2 is the left-right direction of the drawing. An angle between the rolling direction and the direction of the linear non-coated regions 4, as illustrated in FIG. 1, is preferably 50° or more. The angle is more preferably 60° or more. The angle is most preferably 90°. When the angle is 90°, the effect of dividing the width of the magnetic domain by forming the grooves and the effect of decreasing iron loss are maximized. The non-coated regions 4 may each have a continuous line shape as illustrated in FIG. 1, and may each be discontinuous. The non-coated regions 4 may be spaced at equal intervals as illustrated in FIG. 1, and need not be spaced at equal intervals.

As illustrated in FIG. 1, the etching resist coated grain-oriented electrical steel sheet 1 according to the present embodiment has grooves 2a formed in the surface of the grain-oriented electrical steel sheet 2 in the non-coated regions 4. The etching resist coated grain-oriented electrical steel sheet 1 is immersed in an etching treatment liquid, and the etching treatment liquid is brought into contact with the surface of the grain-oriented electrical steel sheet 2 exposed in the non-coated regions 4, whereby the surface of the grain-oriented electrical steel sheet 2 is corroded in the shape of the non-coated regions 4 and the grooves 2a are formed. When the etching resist coating 3 and the non-coated regions 4 are on both sides of the grain-oriented electrical steel sheet 2, the grooves 2a are also formed on both sides of the grain-oriented electrical steel sheet 2. A cross-section size of the grooves 2a in the etching resist coated grain-oriented electrical steel sheet 1 according to the present embodiment may be, for example, 0.20 mm in width and 20 µm in depth.

### (Surface insulation resistance coefficient)

In the etching resist coated grain-oriented electrical steel sheet 1 according to the present embodiment, the surface insulation resistance coefficient of the etching resist coating 3 is 20 Ω·cm²/sheet or more. Hereinafter, "surface insulation resistance coefficient" refers to a value obtained by measuring electrical resistance between a contact electrode that is in contact with the surface of the etching resist coating 3 on one surface of the etching resist coated grain-oriented electrical steel sheet 1 and an earth electrode that is electrically connected to the etching resist coated grain-oriented electrical steel sheet 1, which is the substrate, and dividing the measured electrical resistance value by the contact area of the contact electrode. The surface insulation resistance coefficient thus determined is equivalent to the electrical resistance per unit area of the etching resist coating 3.

The surface insulation resistance coefficient is preferably measured in accordance with Japanese Industrial Standard JIS C 2550-4 or a similar standard IEC 60404-11 established by the International Electrotechnical Commission. The presence or absence of the grooves 2a does not significantly affect the value of the surface insulation resistance coefficient. Accordingly, the surface insulation resistance coefficient may be measured using either the etching resist coated grain-oriented electrical steel sheet 1 in which the grooves 2a have been formed, or the etching resist coated grain-oriented electrical steel sheet 1 before the grooves 2a have been formed. When calculating the contact area of the contact electrode in measuring the surface insulation resistance coefficient, it suffices to ignore the area of the non-coated regions 4 included in the contact area where the etching resist coating 3 is not applied.

When the etching treatment for forming the grooves 2a is carried out by electrolytic etching, the surface insulation resistance coefficient of the etching resist coating 3 is a good indicator of the resistance of the etching resist coating 3 to the electrolytic etching solution, that is, the resist property. The etching resist coating 3 having a surface insulation resistance coefficient of 20 Ω·cm²/sheet or more has a high resist property. When electrolytic etching is carried out using the etching resist coating 3 having such a resist property, the etching resist coating 3 does not deteriorate during the electrolytic etching. Accordingly, a current value during electrolytic etching is stable, and the grooves 2a having a shape that faithfully reflects the outline of the non-coated regions 4 can be formed. The surface insulation resistance coefficient of the etching resist coating 3 is preferably 50 Ω·cm²/sheet or more. An upper limit of the surface insulation resistance coefficient is not particularly limited, and may be, for example, 200 Ω·cm²/sheet or less.

### (Pencil hardness)

In the etching resist coated grain-oriented electrical steel sheet 1 according to the present embodiment, the pencil hardness of the etching resist coating 3 is H or more and 8H or less. Hereinafter, "pencil hardness" refers to the hardness of the hardest pencil that does not produce any scratches when a test is conducted in which a pencil having a known hardness is pressed against and moved across the etching resist coating 3, and resulting scratching is observed. The pencil hardness is preferably measured in accordance with Japanese Industrial Standard JIS K 5600-5-4 or a similar ISO standard, ISO 15184, established by the International Organization for Standardization. Specifically, a pencil having a hardness from H to 9H is prepared, and the pencil core is pressed against the etching resist coating 3 of the etching resist coated grain-oriented electrical steel sheet 1 at an angle of 45° with a load of 750 g, and moved across the etching resist coating 3 over a distance of 7 mm or more, three times. The direction in which the pencil is moved is preferably parallel to the direction of the linear non-coated regions 4. After the test, the surface of the etching resist coating 3 is visually inspected, and the test is repeated with increasing hardness until at least two scratches of 3 mm or more are formed. The hardness of the hardest pencil that did not cause any scratches is considered to be the pencil hardness of the etching resist coating 3. When a scratch occurs with a pencil having a hardness of H, the pencil hardness is considered to be "less than H".

The pencil hardness of the etching resist coating 3 is a good indicator of scratch resistance of the etching resist coating 3. When the pencil hardness of the etching resist coating 3 is H or more, it is possible to prevent scratches from being formed in the etching resist coating 3 from when the etching resist coating 3 is formed on the surface of the grain-oriented electrical steel sheet 2 until the etching resist coated grain-oriented electrical steel sheet 1 is subjected to an etching treatment. This prevents deterioration of the etching resist coating 3 caused by scratches during the electrolytic etching process, thereby improving the resist property. The pencil hardness of the etching resist coating 3 is preferably 3H or more. When the pencil hardness of the etching resist coating 3 is 8H or less, adhesion of the etching resist coating 3 to the grain-oriented electrical steel sheet 2 is improved.

### <Method of producing grain-oriented electrical steel sheet>

According to another embodiment, a method of producing a grain-oriented electrical steel sheet includes: a process of hot rolling a steel slab to obtain a hot-rolled steel sheet; an optional process of hot-rolled sheet annealing the hot-rolled steel sheet to obtain a hot-rolled annealed steel sheet; a process of cold rolling the hot-rolled steel sheet or the hot-rolled annealed steel sheet once or two or more times with intermediate annealing therebetween to obtain a cold-rolled steel sheet; a process of primary recrystallization annealing the cold-rolled steel sheet to obtain a primary recrystallization annealed steel sheet; a process of secondary recrystallization annealing the primary recrystallization annealed steel sheet to obtain a secondary recrystallization annealed steel sheet; a process of applying a coating agent for etching resist coating formation to a surface of a specified steel sheet selected from the group consisting of the hot-rolled steel sheet, the hot-rolled annealed steel sheet, the cold-rolled steel sheet, the primary recrystallization annealed steel sheet, and the secondary recrystallization annealed steel sheet, and at that time, leaving a plurality of non-coated regions where the coating agent for etching resist coating formation is not applied linearly along a direction intersecting the rolling direction of the specified steel sheet; a subsequent process of applying a baking treatment to the specified steel sheet to bake the coating agent for etching resist coating formation to form an etching resist coating; and a subsequent process of applying an etching treatment to the specified steel sheet to form grooves on the surface of the specified steel sheet in the non-coated regions. The etching resist coating has a surface insulation resistance coefficient of 20 Ω·cm²/sheet or more and a pencil hardness of H or more and 8H or less.

### (1) Specified steel sheet

In the method of producing a grain-oriented electrical steel sheet according to the present embodiment, first, a steel sheet to be coated with a coating agent for etching resist coating formation is prepared. The steel sheet to be coated with the coating agent for etching resist coating formation is any steel sheet that will ultimately become a grain-oriented electrical steel sheet and that has been subjected to hot rolling. Here, grain-oriented electrical steel sheets are typically produced by the following processes. That is, a process of hot rolling a steel slab to obtain a hot-rolled steel sheet; an optional process of hot-rolled sheet annealing the hot-rolled steel sheet to obtain a hot-rolled annealed steel sheet; a process of cold rolling the hot-rolled steel sheet or the hot-rolled annealed steel sheet once or two or more times with intermediate annealing therebetween to obtain a cold-rolled steel sheet; a process of primary recrystallization annealing the cold-rolled steel sheet to obtain a primary recrystallization annealed steel sheet; a process of secondary recrystallization annealing the primary recrystallization annealed steel sheet to obtain a secondary recrystallization annealed steel sheet.

When the grain-oriented electrical steel sheet is produced using a etching resist coated steel sheet, the components and composition of the grain-oriented electrical steel sheet finally obtained are not particularly limited. The thickness of the grain-oriented electrical steel sheet is not particularly limited. When the steel sheet is thin, iron loss is low. However, when the steel sheet is excessively thin, not only does shape stability decrease, but also production cost of the steel sheet increases. The thickness of the grain-oriented electrical steel sheet is therefore preferably 50 µm or more. Further, when the electrical steel sheet is thicker, the iron loss is greater. The thickness of the grain-oriented electrical steel sheet is therefore preferably 0.50 mm or less. The thickness is more preferably 0.30 mm or less.

According to the present embodiment, there are two types of steel sheets to which the coating agent for etching resist coating formation is applied. One is a secondary recrystallization annealed steel sheet obtained by completing all the processes up to the secondary recrystallization annealing described above. The other is a steel sheet that is an intermediate product in the production of a grain-oriented electrical steel sheet. Specific examples of the latter include a hot-rolled steel sheet, a hot-rolled annealed steel sheet, a cold-rolled steel sheet, and a primary recrystallization annealed steel sheet. Here, the hot-rolled steel sheet and the hot-rolled annealed steel sheet may include a steel sheet before or after intermediate annealing when cold rolling is carried out two or more times with intermediate annealing in between, and a steel sheet for which all cold rolling has not been completed.

According to the present embodiment, the target to which the coating agent for etching resist coating formation is applied and subjected to etching treatment is a specified steel sheet selected from the group consisting of the hot-rolled steel sheet, the hot-rolled annealed steel sheet, the cold-rolled steel sheet, the primary recrystallization annealed steel sheet, and the secondary recrystallization annealed steel sheet. However, when an intermediate product is subjected to an etching treatment to form grooves on the surface of the steel sheet and then further rolled, the grooves formed by the etching treatment may disappear. For this reason, when selecting an intermediate product other than the secondary recrystallization annealed steel sheet as the specified steel sheet, it is preferable to select the cold-rolled steel sheet after all cold rolling has been completed (hereinafter sometimes referred to as a "final cold-rolled steel sheet") or the primary recrystallization annealed steel sheet.

According to the present embodiment, the etching resist coating formed on the surface of the specified steel sheet may be burned away or change under the high temperatures that are generated when the specified steel sheet is subjected to heat treatment. Therefore, when an intermediate product described above is used as the specified steel sheet to which the coating agent for etching resist coating formation is applied, it is preferable to carry out the application of the coating agent for etching resist coating formation, the subsequent baking treatment, and the etching treatment in succession, and then carry out subsequent processes involving heat treatment. The series of processes for forming grooves on the surface of the specified steel sheet may be carried out once, and may be carried out twice or more.

### (2) Application of coating agent for etching resist coating formation

In the method of producing a grain-oriented electrical steel sheet according to the present embodiment, the coating agent for etching resist coating formation is applied to the surface of the specified steel sheet, leaving a plurality of non-coated regions in which the coating agent for etching resist coating formation is not applied, the non-coated regions being arranged linearly along a direction intersecting the rolling direction of the specified steel sheet. The surface to which the coating agent for etching resist coating formation is applied may be one surface of the specified steel sheet, or both surfaces of the specified steel sheet.

Hereinafter, "coating agent for etching resist coating formation" refers to a liquid coating agent containing a resin as a main component, the liquid coating agent being used for etching resist coating formation. Preferred components of the coating agent for etching resist coating formation used according to the present embodiment are described later. The method of applying the coating agent for etching resist coating formation is not particularly limited. When gravure printing is used as a method of applying the coating agent for etching resist coating formation, a coated region where the etching resist coating 3 is formed and the non-coated regions 4 where no etching resist coating is applied, as illustrated in FIG. 1, may be formed simultaneously.

According to the present embodiment, the direction in which the linear non-coated regions 4 are provided is a direction intersecting the rolling direction, and an angle between the rolling direction and the direction along which the linear non-coated regions 4 extend is preferably 50° or more. The angle is more preferably 60° or more. The angle is most preferably 90°, as illustrated in FIG. 1. The non-coated regions 4 may each have a continuous line shape as illustrated in FIG. 1, and may each be discontinuous. The non-coated regions 4 may be spaced at equal intervals as illustrated in FIG. 1, and need not be spaced at equal intervals. The width of each of the non-coated regions 4 may be, for example, 0.20 mm.

### (3) Baking treatment of coating agent for etching resist coating formation

In the method of producing a grain-oriented electrical steel sheet according to the present embodiment, the specified steel sheet coated with the coating agent for etching resist coating formation is subjected to a baking treatment. The method of carrying out the baking treatment is not particularly limited, and a baking treatment using a commonly used method such as hot air, infrared heating, induction heating, or the like may be applied.

In the method of producing a grain-oriented electrical steel sheet according to the present embodiment, the temperature for the baking treatment may be a temperature that is typically used. The temperature of the baking treatment, in terms of steel sheet maximum arrival temperature, is preferably 120 °C or higher. The temperature of the baking treatment is preferably 350 °C or lower. Hereinafter, "steel sheet maximum arrival temperature" refers to the temperature measured at the surface of the specified steel sheet as the maximum temperature reached in the heat treatment process. When the steel sheet maximum arrival temperature is 120 °C or higher, the curing of the coating agent for etching resist coating formation proceeds sufficiently. The maximum arrival temperature is more preferably 150 °C or higher. The maximum arrival temperature is even more preferably 170 °C or higher. When the steel sheet maximum arrival temperature is 350 °C or lower, decomposition of the etching resist coating due to heat may be suppressed. The steel sheet maximum arrival temperature is preferably 300 °C or lower. The steel sheet maximum arrival temperature is more preferably 260 °C or lower. A baking time in the baking treatment, that is, the time from the start of heating until reaching the steel sheet maximum arrival temperature, is not particularly limited.

In the method of producing a grain-oriented electrical steel sheet according to the present embodiment, coating weight of the etching resist coating per side is preferably 0.50 g/m² or more. By setting the coating weight of the etching resist coating to 0.50 g/m² or more, it is possible to provide the etching resist coated specified steel sheet that has a particularly good resist property. The coating weight of the etching resist coating per side is more preferably 3.0 g/m² or more. Further, the coating weight of the etching resist coating per side is preferably 20 g/m² or less. By setting the coating weight of the etching resist coating to 20 g/m² or less, degradation of the adhesion of the coating and an increase in costs can be prevented. The coating weight of the etching resist coating per side may be determined by dissolving and removing only the etching resist coating from the etching resist coated specified steel sheet after the baking treatment using a hot alkali or the like, and measuring a change in weight of the specified steel sheet before and after the removal.

### (4) Etching treatment

In the method of producing a grain-oriented electrical steel sheet according to the present embodiment, the specified steel sheet on which the etching resist coating has been formed is subjected to the etching treatment to form grooves on the surface of the specified steel sheet in the non-coated regions. The method of the etching treatment is not particularly limited, and may be, for example, electrolytic etching. When electrolytic etching is carried out, preferably NaCl, KCl, CaCl₂, NaNO₃, or the like is used as the electrolyte solution, current density is preferably about 5 A/dm² to 50 A/dm², and electrolysis time is preferably about 5 s to 20 s. The conditions of the etching treatment are preferably adjusted so that, in a cross-section perpendicular to the extension direction of the grooves formed by the etching treatment, an angle between side walls of the grooves and the thickness direction is 60° or less, and a height of a convex portion formed at the bottom of the grooves is 1/2 or less of the maximum depth of the grooves. By adjusting the shape of the grooves in this way, the effect of reducing iron loss is increased. The depth of the grooves may be, for example, 20 µm.

In the method of producing a grain-oriented electrical steel sheet according to the present embodiment, after the etching treatment, the remaining treatments required to make the specified steel sheet a grain-oriented electrical steel sheet are appropriately carried out depending on the processing stage of the specified steel sheet in producing the grain-oriented electrical steel sheet, thereby making it possible to produce a grain-oriented electrical steel sheet with decreased iron loss.

In the method of producing a grain-oriented electrical steel sheet according to the present embodiment, the etching resist coating remains on the etching resist coated specified steel sheet after the grooves have been formed by the etching treatment. After the etching treatment, this etching resist coating may be removed, but need not be removed. In the case where the etching resist coating is not removed, the etching resist coating may also function as an insulating tension coating. When removing the etching resist coating, the method of removal is not particularly limited, and any known method may be used. As a method of removing the etching resist coating, for example, a method may be adopted in which the etching resist coated specified steel sheet is immersed in an alkaline solution such as an aqueous NaOH solution or the like to soften the etching resist coating, and then the etching resist coating is washed away and removed using a brush.

### (5) Surface insulation resistance coefficient and pencil hardness

In the method of producing a grain-oriented electrical steel sheet according to the present embodiment, the surface insulation resistance coefficient of the etching resist coating is 20 Ω·cm²/sheet or more, and the pencil hardness of the etching resist coating is H or more and 8H or less. The methods of measuring the surface insulation resistance coefficient and the pencil hardness of the etching resist coating and the effect of controlling these values to the ranges specified in the present disclosure have already been described, so further description is omitted here. In order to control the surface insulation resistance coefficient and the pencil hardness of the etching resist coating to the ranges described above, it is effective to control the coating weight of the etching resist coating to the ranges described above and also to adjust the components of the coating agent for etching resist coating formation used to form the etching resist coating.

### <Solid content and solid content equivalent>

Before describing each component contained in the coating agent for etching resist coating formation used according to the present embodiment, the method of expressing the components is described. Hereinafter, "solid content" refers to remaining solid components of the coating agent for etching resist coating formation, excluding substances that are lost by evaporation, such as solvent and water. When the coating agent for etching resist coating formation is applied to the surface of the specified steel sheet and baking treatment is applied, solvent, water, and the like evaporate, and the remaining solid content forms an etching resist coating.

Hereinafter, "solid content equivalent" refers to, when expressing the content of a component contained in the coating agent for etching resist coating formation, content based on the solid content of each component. As described below, the coating agent for etching resist coating formation used according to the present embodiment is synthesized by mixing an aqueous alkyd resin, a melamine resin, and an extender pigment in a solvent. The aqueous alkyd resin and the melamine resin used in the synthesis may themselves contain solvent. Further, the extender pigment may adsorb moisture from the air. For this reason, when indicating the content of each component, it is appropriate to indicate the content as solid content equivalent, rather than the mass ratio of the components actually mixed. Specifically, the mass of the solid content of the aqueous alkyd resin contained in the coating agent for etching resist coating formation is taken as 100 parts by mass, and the content is expressed in parts by mass of the solid content of other components converted based on this.

The content of each component expressed as solid content equivalent does not change before and after the application and baking treatment of the coating agent for etching resist coating formation. Therefore, by quantitatively analyzing the components of the etching resist coating after baking treatment, it is possible to know the content of each component, as solid content equivalent, contained in the coating agent for etching resist coating formation before baking treatment.

### <Components of coating agent for etching resist coating formation>

The following describes each component contained in the coating agent for etching resist coating formation used according to the present embodiment.

### (1) Aqueous alkyd resin

The coating agent for etching resist coating formation used according to the present embodiment preferably contains 100 parts by mass of an aqueous alkyd resin as solid content equivalent. As described above, the aqueous alkyd resin is the main component of the coating agent for etching resist coating formation used according to the present embodiment, and also becomes the main component of the etching resist coating after application and baking treatment. Aqueous resin is a general term for a water-dispersed resin in which resin is uniformly dispersed in water, and for a water-soluble resin that is easily soluble in water.

As the aqueous alkyd resin, any conventionally known resin may be used without any particular limitation. The alkyd resin that is a material of the aqueous alkyd resin may be obtained by subjecting a polybasic acid, a polyhydric alcohol, and an oil or fat or processed oil/fat to a dehydration condensation reaction, and optionally further reacting with a monobasic acid. The coating agent for etching resist coating formation used according to a preferred embodiment is an aqueous alkyd resin obtained by reacting an alkyd resin with a polymerizable vinyl monomer. According to this preferred embodiment, by using an aqueous alkyd resin obtained by reacting an alkyd resin with a polymerizable vinyl monomer, it is possible to obtain a coating agent for etching resist coating formation that is capable of forming an etching resist coating having an excellent resist property and removability.

### (Polybasic acid)

Examples of polybasic acids used in the synthesis of alkyd resins include phthalic acid, isophthalic acid, terephthalic acid, trimellitic acid, tetrahydrophthalic acid, succinic acid, maleic acid, adipic acid, sebacic acid, azelaic acid, himic acid, itaconic acid, methylhexahydrophthalic acid, 1,4-cyclohexanedicarboxylic acid, methylcyclohexenetricarboxylic acid, pyromellitic acid, and anhydrides thereof. These polybasic acids may be used alone or in a combination of two or more.

### (Polyhydric alcohol)

Examples of polyhydric alcohols used in the synthesis of alkyd resins include ethylene glycol, polyethylene glycol, propylene glycol, polypropylene glycol, butanediol, decanediol, diethylene glycol, pentanediol, neopentyl glycol, butylethylpropanediol, glycerin, trimethylolethane, trimethylolpropane, pentaerythritol, sorbitol, 1,4-cyclohexanedimethanol, and tricyclodecanedimethanol. These polyhydric alcohols may be used alone or in a combination of two or more.

### (Oil or fat or processed oil/fat)

Examples of oils or fats used in the synthesis of alkyd resins include tung oil, linseed oil, dehydrated castor oil, safflower oil, soybean oil, castor oil, tall oil, rice bran oil, and fatty acids thereof, high diene fatty acids, and the like. Further, as processed oil/fat, processed oil/fat obtained using the oils and fats above as a main raw material may be used. Examples of such processed oil/fat include modified oils, isomerized oils, polymerized oils, maleated oils, boiled oils, and the like that are obtained using the oils or fats above as main raw materials. These oils or fats or processed oils/fats may be used alone or in a combination of two or more.

### (Monobasic acid)

Monobasic acids optionally used in the synthesis of the alkyd resin include, for example, benzoic acid, p-t-butylbenzoic acid, methylbenzoic acid, versatic acid, isodecanoic acid, isotridecanoic acid, crotonic acid, non-drying oil fatty acids, and the like. These monobasic acids can be used alone or in a combination of two or more.

### (Polymerizable vinyl monomer)

According to a preferred embodiment, as the polymerizable vinyl monomer to be reacted with the alkyd resin to obtain the aqueous alkyd resin, any conventionally known polymerizable vinyl monomer may be used without particular limitation. Examples of the polymerizable vinyl monomer used in the reaction with the alkyd resin include (meth)acrylic acid ester monomers such as methyl (meth)acrylate, ethyl (meth)acrylate, n-propyl (meth)acrylate, cyclohexyl (meth)acrylate, methylcyclohexyl (meth)acrylate, ethylcyclohexyl (meth)acrylate, cycloheptyl (meth)acrylate, tolyl (meth)acrylate, and glycidyl (meth)acrylate; aromatic polymerizable unsaturated monomers such as styrene, α-methylstyrene, chlorostyrene, vinyltoluene, vinylnaphthalene, phenyl (meth)acrylate, benzyl (meth)acrylate, and vinyl benzoate; vinyl monomers such as vinyl acetate and vinyl propionate; N-alkoxy-substituted amide monomers such as N-methoxymethyl(meth)acrylamide, N-ethoxymethyl(meth)acrylamide and N-butoxymethyl(meth)acrylamide; fluorine-containing vinyl monomers such as perfluoroethylene, perfluoropropylene and vinylidene fluoride; silicon-containing vinyl monomers such as vinyltrimethoxysilane and vinyltriethoxysilane; dialkyl esters such as maleic acid and fumaric acid; alkenes such as ethylene and propylene; conjugated dienes such as butadiene and isoprene; monomers such as vinyl chloride and allyl chloride; (meth)acrylic acid, itaconic acid, maleic acid monomethyl ester, maleic acid monobutyl ester, itaconic acid monobutyl ester, sulfonic acid group-containing (meth)acrylate, phosphoric acid group-containing (meth)acrylate, 2-hydroxyethyl (meth)acrylate, 2-hydroxypropyl (meth)acrylate, 3-hydroxypropyl (meth)acrylate, 4-hydroxybutyl (meth)acrylate; lactone adducts to 2-hydroxyethyl (meth)acrylate, ring-opening adducts of ethylene oxide to 2-hydroxyethyl (meth)acrylate or 2-hydroxypropyl (meth)acrylate, ring-opening adducts of propylene oxide to 2-hydroxyethyl (meth)acrylate or 2-hydroxypropyl (meth)acrylate, dimers or trimers of 2-hydroxyethyl (meth)acrylate or 2-hydroxypropyl (meth)acrylate, N,N-dimethylaminoethyl (meth)acrylate, N,N-methylethylaminoethyl (meth)acrylate, N,N-diethylaminoethyl (meth)acrylate, N,N-dipropylaminoethyl (meth)acrylate, N,N-dimethylaminopropyl (meth)acrylate, N,N-methylpropylaminopropyl (meth)acrylate, N,N-diethylaminopropyl (meth)acrylate, N,N-dipropylaminopropyl (meth)acrylate, N,N-dimethylaminopropylacrylamide, and N,N-diethylaminopropylacrylamide. These polymerizable vinyl monomers may be used alone or in a combination of two or more.

The aqueous alkyd resin may be a commercially available product or may be synthesized from raw materials. When using a commercially available product, it is preferable to use one synthesized using any of the compounds listed above as a raw material. When the aqueous alkyd resin is synthesized from raw materials, it is preferable to carry out the following procedure. First, defined amounts of polybasic acid, polyhydric alcohol, oil or fat or processed oil/fat, and optionally monobasic acid, are charged into a reaction vessel, and the contents are heated with stirring to cause a dehydration condensation reaction. When the acid value of the solid content reaches 3 mgKOH/g to 30 mgKOH/g, heating is stopped and the mixture is cooled. The acid value of the solid content is preferably measured in accordance with Japanese Industrial Standard JIS K 0070. Next, a solvent is added to the resulting reaction mixture to prepare an alkyd resin solution, and the alkyd resin solution is heated with stirring, and a mixture of a polymerizable vinyl monomer and a polymerization initiator that has been prepared in advance is added dropwise. After the dropwise addition is completed, the polymerization initiator is further added dropwise to the reaction mixture, which is then stirred to carry out the reaction. Further, a neutralizing agent and a solvent are added to the reaction mixture and mixed to obtain a solution containing an aqueous alkyd resin.

The aqueous alkyd resin synthesized by the above procedure preferably has an acid value of 30 mgKOH/g or more and 80 mgKOH/g or less, a hydroxyl value of 50 mgKOH/g or more and 150 mgKOH/g or less, a number-average molecular weight of 2000 or more and 10,000 or less, and a weight-average molecular weight of 10,000 or more and 50,000 or less.

The solvent used in synthesizing the aqueous alkyd resin is not particularly limited. Preferred examples of the solvent include glycol ethers such as ethylene glycol mono-n-butyl ether, diethylene glycol mono-n-butyl ether, propylene glycol monomethyl ether, propylene glycol monoethyl ether, propylene glycol mono-n-butyl ether, propylene glycol mono-t-butyl ether, dipropylene glycol monomethyl ether, methyl cellosolve, ethyl cellosolve, and t-butyl cellosolve; and alcohols such as isopropyl alcohol and butyl alcohol.

The polymerization initiator used in synthesizing the aqueous alkyd resin is not particularly limited. Preferred examples of the polymerization initiator include dibenzoyl peroxide and 2,2'-azobisbutyronitrile.

The neutralizing agent used in synthesizing the aqueous alkyd resin is not particularly limited. Preferred neutralizing agents include, for example, triethylamine and diethylethanolamine.

### (2) Melamine resin

The coating agent for etching resist coating formation used according to the present embodiment preferably contains 0.10 parts by mass or more of melamine resin as solid content equivalent in a solvent. The melamine resin content is preferably 30 parts by mass or less. The melamine resin is contained in the coating agent for etching resist coating formation as a crosslinking agent that crosslinks the aqueous alkyd resin. The inclusion of melamine resin enhances adhesion between the etching resist coating and the specified steel sheet. As the melamine resin, for example, methylated melamine, butylated melamine, and the like may be used.

When the solvent contains 0.10 parts by mass or more of melamine resin per 100 parts by mass of the aqueous alkyd resin as solid content equivalent, the adhesion between the formed etching resist coating and the specified steel sheet is enhanced, and the resist property and the pencil hardness is improved. On the other hand, when the solvent contains 30 parts by mass or less of melamine resin, the crosslink density does not increase excessively. This allows the etching resist coating to maintain appropriate hardness and adhesion, so that the removability of the etching resist coating does not degrade. Therefore, the content of the melamine resin is 0.10 parts by mass or more and 30 parts by mass or less relative to 100 parts by mass of the aqueous alkyd resin, as solid content equivalent. The content of the melamine resin is preferably 1.0 part by mass or more. The content of the melamine resin is more preferably 2.0 parts by mass or more. The content of the melamine resin is preferably 20 parts by mass or less. The content of the melamine resin is more preferably 15 parts by mass or less.

### (3) Extender pigment

The coating agent for etching resist coating formation used according to the present embodiment preferably contains 5.0 parts by mass or more of an extender pigment as solid content equivalent in a solvent. The extender pigment content is preferably 100 parts by mass or less. The extender pigment is contained in the coating agent for etching resist coating formation as an extender for the coating. Extender pigments are generally inexpensive and chemically stable, and therefore may be suitably used as extenders for etching resist coatings. The type of extender pigment is not particularly limited, and various known extender pigments may be used. Preferred examples of the extender pigment include calcium carbonate, barium sulfate, and aluminum hydroxide. These extender pigments may be used alone or in a combination of two or more.

When the content of the extender pigment is 5.0 parts by mass or more per 100 parts by mass of the solid content of the aqueous alkyd resin, as solid content equivalent in solvent, securing the thickness of the etching resist coating becomes easier, and the resist property is improved. On the other hand, when the content of the extender pigment is 100 parts by mass or less, the concentration of the extender pigment does not become excessive, and the adhesion and the resist property do not degrade. The content of the extender pigment is therefore 5.0 parts by mass or more and 100 parts by mass or less per 100 parts by mass of the aqueous alkyd resin, as solid content equivalent. The content of the extender pigment is preferably 6.0 parts by mass or more. The content of the extender pigment is more preferably 10 parts by mass or more. The content of the extender pigment is preferably 80 parts by mass or less. The content of the extender pigment is more preferably 50 parts by mass or less.

Extender pigments are typically insulators, and therefore the higher the proportion of extender pigment contained in the etching resist coating, the higher the surface insulation resistance coefficient and the better the resist property. In particular, when the coating weight of the etching resist coating is small, it becomes easy to control the surface insulation resistance coefficient to 20 Ω·cm²/sheet or more by increasing the proportion of the extender pigment contained in the etching resist coating. Conversely, when the coating weight of the etching resist coating is large, electrical resistance can be secured by components other than the extender pigment, and therefore the surface insulation resistance coefficient can be controlled to 20 Ω·cm²/sheet or more without significantly increasing the proportion of the extender pigment. On the other hand, in relation to the pencil hardness, it is desirable not to make the proportion of the extender pigment contained in the etching resist coating too high. This is because the higher the proportion of the extender pigment, the lower the relative proportion of the aqueous alkyd resin that binds the extender pigment, resulting in a lower pencil hardness.

### (4) Total solid content

In the coating agent for etching resist coating formation used according to the present embodiment, the total amount of the solid content of the aqueous alkyd resin, the melamine resin, and the extender pigment is preferably 80 mass% or more of the total solid content. Hereinafter, "total solid content" refers to the total amount of solid content of all components contained in the coating agent for etching resist coating formation. When the proportion of the total amount of the solid content of the aqueous alkyd resin, the melamine resin and the extender pigment to the total solid content is 80 mass% or more, the components of the etching resist coating formed by the coating agent for etching resist coating formation are not greatly diluted by other components described later. The effects of the present disclosure exhibited by the etching resist coating are therefore not impaired. There is no particular upper limit on the proportion of the total amount of the solid content of the aqueous alkyd resin, the melamine resin and the extender pigment in the total solid content, and the proportion of the total amount may be 100 mass% or less.

### (5) Solvent

The coating agent for etching resist coating formation used according to the present embodiment preferably contains the aqueous alkyd resin, the melamine resin, and the extender pigment in a solvent. The solvent functions as a solvent for uniformly dissolving the resin and uniformly mixing the pigment, and also makes it easier to apply the coating agent for etching resist coating formation. Further, from the viewpoint of affinity with water, the solvent more preferably contains ethylene glycol mono-n-butyl ether.

The solvent may be mixed with a hydrophilic solvent. Specific examples of hydrophilic solvent include glycol ethers such as diethylene glycol mono-n-butyl ether, propylene glycol monomethyl ether, propylene glycol monoethyl ether, propylene glycol mono-n-butyl ether, propylene glycol mono-t-butyl ether, dipropylene glycol monomethyl ether, methyl cellosolve, ethyl cellosolve, and t-butyl cellosolve, and alcohols such as isopropyl alcohol and butyl alcohol. These solvents may be used alone or in a combination of two or more.

The solvent may be mixed with a hydrophobic solvent such as toluene, xylene, or the like. These hydrophobic solvents may be used alone or in a combination of two or more.

The proportion of the solvent in the coating agent for etching resist coating formation is not particularly limited. The proportion of the solvent is preferably 20 mass% or more. The proportion of the solvent is preferably 90 mass% or less. That is, the proportion of the total solid content in the coating agent for etching resist coating formation is preferably 10 mass% or more. The proportion of the total solid content is preferably 80 mass% or less. When the amounts of the solvent and total solid content in the coating agent for etching resist coating formation are within the above ranges, the coating agent for etching resist coating formation has good storage stability and good workability when applied to the specified steel sheet.

### (6) Other components

The coating agent for etching resist coating formation used according to a preferred embodiment further contains, in a solvent, one or more selected from a surfactant, a rust inhibitor, a lubricant, a leveling agent, a neutralizing agent, a defoamer, an antioxidant, and a coloring pigment. These components are added to further improve the performance and uniform coating property of the etching resist coating. These other components may be used alone or in a combination of two or more. When the total amount of the solid content of these other components is 20 mass% or less of the total solid content, the performance of the etching resist can be sufficiently maintained.

### <Method of producing coating agent for etching resist coating formation>

The method of producing the coating agent for etching resist coating formation is not particularly limited. The following procedure is preferably carried out. First, a portion of the solution containing the aqueous alkyd resin is charged into a reaction vessel equipped with a stirrer, a thermometer, a reflux condenser, and the like, and the extender pigment and, as required, a hydrophilic solvent are added and uniformly dispersed. Next, the remainder of the solution containing the aqueous alkyd resin and the melamine resin are added and dispersed to obtain a dispersion. To the obtained dispersion, a leveling agent, a neutralizing agent, a defoamer, and water are added as required to prepare the coating agent for etching resist coating formation.

### EXAMPLES

Effects of the present disclosure are described in detail below based on examples, but the present disclosure is not limited to these examples.

### (1) Production of coating agent for etching resist coating formation

As starting materials, the aqueous alkyd resin, the melamine resin, the extender pigment, and the other components listed in Table 1 were prepared. Among the starting materials listed in Table 1, the aqueous alkyd resin was produced by the method described below. Other starting materials used were those with the manufacturers and trade names listed in Table 1.

### [Table 1]

**Table 1**

| Component | Name | Manufacturer | Trade name |
|---|---|---|---|
| Aqueous alkyd resin | Aqueous alkyd resin | - | - |
| Melamine resin | Methylated melamine | DIC Corporation | WATERSOL S-695 |
| Extender pigment | Calcium carbonate | Maruo Calcium Co., Ltd. | TF heavy coal |
| Other components | Organic pigment | Dainichiseika Color & Chemicals Mfg. Co., Ltd. | Cyanine Blue 4920 |
| | Surfactant | Kyoeisha Chemical Co., Ltd. | Polyflow WS |

WATERSOL is a registered trademark of DIC Corporation.

The aqueous alkyd resin indicated in Table 1 was produced by the method described below. First, 75 parts by mass of linseed oil, 16 parts by mass of glycerin, 40 parts by mass of phthalic anhydride, 1 part by mass of maleic anhydride, 20 parts by mass of pentaerythritol, and 5 parts by mass of xylene were charged into a reaction vessel equipped with a stirrer, a thermometer, a reflux condenser, a dehydrator, a nitrogen gas inlet tube, and the like, and the mixture was stirred while being heated under a nitrogen atmosphere until the temperature of the mixture reached 220 °C, and the reaction was continued until the acid value of the solid content of the mixture reached 8 mgKOH/g, followed by cooling. The acid value of the solid content was measured in accordance with Japanese Industrial Standard JIS K 0070. Next, 72 parts by mass of ethylene glycol mono-n-butyl ether was added as a solvent to the obtained reaction mixture and mixed to obtain an alkyd resin solution having an oil length of 55 %, an acid value of 8 mgKOH/g, a hydroxyl value of 120 mgKOH/g, a heating residue of 65 %, a number-average molecular weight of 3200 and a weight-average molecular weight of 19,500.

Next, 150 parts by mass of the obtained alkyd resin solution was charged into a reaction vessel equipped with a stirrer, a thermometer, a reflux condenser, and the like, and stirred while heating. Once the temperature of the solution reached 110 °C, a mixture obtained by previously mixing 16 parts by mass of styrene, 16 parts by mass of methyl methacrylate, 4 parts by mass of acrylic acid, and 1 part by mass of dibenzoyl peroxide as a polymerization initiator was added dropwise over 4 h, thereby carrying out a dehydration condensation reaction. After completion of the dropwise addition, while maintaining the reaction mixture at 110 °C, a mixture of 0.5 parts by mass of dibenzoyl peroxide and 5 parts by mass of ethylene glycol mono-n-butyl ether was further added dropwise as a polymerization initiator over a period of 3 h, followed by continued stirring at 110 °C for 2 h to carry out the reaction, and then cooling. Next, 14 parts by mass of triethylamine was added to the obtained reaction mixture and stirred, and then 5 parts by mass of ethylene glycol mono-n-butyl ether was added and mixed to obtain a solution containing an aqueous alkyd resin having an oil length of 38, an acid value of 56 mgKOH/g, a hydroxyl value of 84 mgKOH/g, a heating residue of 65 %, a number-average molecular weight of 3200 and a weight-average molecular weight of 25,700.

Next, the starting materials listed in Table 1 were mixed according to the following procedure to prepare coating agents for etching resist coating formation having the components and content as solid content equivalent listed in Table 2. First, a portion of the solution containing the aqueous alkyd resin was placed in a disperser, and the extender pigment, organic pigment among the other components, and ethylene glycol mono-n-butyl ether (5 mass% of the total) as a solvent were added and uniformly dispersed, and a particle gauge was used to confirm that the particle size of the extender pigment was 10 µm or less. Next, the remainder of the resin and the melamine resin were added and dispersed to obtain a dispersion. Further, in order to improve a filmforming property, a surfactant from the other components was added to the obtained dispersion in an amount of 0.5 mass% of the total. Further, triethylamine as a neutralizing agent and ethylene glycol mono-n-butyl ether as a solvent were added to adjust the pH of the coating agent for etching resist coating formation to 9.0 and the solid content to 60 mass%, respectively.

Table 2 lists the components and the content as solid content equivalent of the obtained coating agent for etching resist coating formation having different chemical compositions, from No. 1 to No. 22. The content of each component listed in Table 2, expressed in mass%, is the proportion of the solid content of each component to the total solid content, that is, the total amount of the solid content of all components contained in the coating agent for etching resist coating formation. Further, the content listed in parts by mass is the parts by mass of other components relative to 100 parts by mass of the aqueous alkyd resin.

### [Table 2]

**Table 2**

| No. | Components and content of coating agent for etching resist coating formation (solid content equivalent) | | | | | | | | Remarks |
|---|---|---|---|---|---|---|---|---|---|
| | Aqueous alkyd resin | | Melamine resin | | Extender pigment | | Other components | | |
| | Content (mass%) | Content (parts by mass) | Content (mass%) | Content (parts by mass) | Content (mass%) | Content (parts by mass) | Content (mass%) | Content (parts by mass) | |
| 1 | 68.8 | 100 | 1.5 | 2.2 | 25.7 | 37.4 | 4.0 | 5.8 | Example |
| 2 | 69.8 | 100 | 0.1 | 0.1 | 26.1 | 37.4 | 4.0 | 5.7 | Example |
| 3 | 64.6 | 100 | 7.5 | 11.6 | 24.1 | 37.3 | 3.8 | 5.9 | Example |
| 4 | 58.4 | 100 | 16.4 | 28.1 | 21.8 | 37.3 | 3.4 | 5.8 | Example |
| 5 | 87.7 | 100 | 1.9 | 2.2 | 5.3 | 6.0 | 5.1 | 5.8 | Example |
| 6 | 49.3 | 100 | 1.1 | 2.2 | 46.8 | 94.9 | 2.8 | 5.7 | Example |
| 7 | 58.7 | 100 | 1.3 | 2.2 | 21.9 | 37.3 | 18.1 | 30.8 | Example |
| 8 | 68.8 | 100 | 1.5 | 2.2 | 25.7 | 37.4 | 4.0 | 5.8 | Example |
| 9 | 68.8 | 100 | 1.5 | 2.2 | 25.7 | 37.4 | 4.0 | 5.8 | Example |
| 10 | 68.8 | 100 | 1.5 | 2.2 | 25.7 | 37.4 | 4.0 | 5.8 | Example |
| 11 | 68.8 | 100 | 1.5 | 2.2 | 25.7 | 37.4 | 4.0 | 5.8 | Example |
| 12 | 68.8 | 100 | 1.5 | 2.2 | 25.7 | 37.4 | 4.0 | 5.8 | Example |
| 13 | 49.2 | 100 | 29.5 | 60.0 | 18.4 | 37.4 | 2.9 | 5.9 | Comparative Example |
| 14 | 69.9 | 100 | 0.01 | 0.01 | 26.1 | 37.3 | 4.0 | 5.7 | Comparative Example |
| 15 | 56.8 | 100 | 18.7 | 32.9 | 21.3 | 37.5 | 3.2 | 5.6 | Comparative Example |
| 16 | 89.3 | 100 | 2.0 | 2.2 | 3.6 | 4.0 | 5.1 | 5.7 | Comparative Example |
| 17 | 46.9 | 100 | 1.0 | 2.1 | 49.2 | 104.9 | 2.9 | 6.2 | Comparative Example |
| 18 | 47.3 | 100 | 1.0 | 2.1 | 17.7 | 37.4 | 34.0 | 71.9 | Comparative Example |
| 19 | 68.8 | 100 | 1.5 | 2.2 | 25.7 | 37.4 | 4.0 | 5.8 | Example |
| 20 | 64.6 | 100 | 7.5 | 11.6 | 24.1 | 37.3 | 3.8 | 5.9 | Example |
| 21 | 68.8 | 100 | 1.5 | 2.2 | 25.7 | 37.4 | 4.0 | 5.8 | Example |
| 22 | 64.6 | 100 | 7.5 | 11.6 | 24.1 | 37.3 | 3.8 | 5.9 | Example |

Underlining indicates content that is outside an appropriate range of the present disclosure.

### (2) Production of etching resist coated grain-oriented electrical steel sheet

In the production of the grain-oriented electrical steel sheets, steel sheets having a width of 150 mm and a length of 300 mm were cut out and used as specified steel sheets, and were either a final cold-rolled steel sheet having a thickness of 0.23 mm after all cold rolling was completed, a primary recrystallized sheet after primary recrystallization annealing, or a secondary recrystallization annealed steel sheet after secondary recrystallization annealing. The coating agent for etching resist coating formation produced by the above method was uniformly applied to the entire surface of one side of each of the specified steel sheets using a roll coater. For each of these examples, the coating agent for etching resist coating formation was uniformly applied to the specified steel sheet for the purpose of evaluating the etching resist coating. However, as described above, when gravure printing is used as the method for applying the coating agent for formation, the coated region and the non-coated regions can be formed simultaneously.

Next, the specified steel sheet coated with the coating agent for etching resist coating formation was baked in a hot air baking oven at the steel sheet maximum arrival temperature and drying time listed in Table 3, and then allowed to naturally cool to room temperature. Next, for the etching resist coated specified steel sheets No. 19 to 22, which were made using a final cold-rolled steel sheet or a primary recrystallization annealed steel sheet as the specified steel sheet, unperformed processes among the processes for producing grain-oriented electrical steel sheets were carried out to obtain etching resist coated grain-oriented electrical steel sheets.

Next, the etching resist coated grain-oriented electrical steel sheets No. 1 to 22 produced by the method described above were subjected to property evaluations by the following methods. The evaluation results are listed in Table 3.

**Table 3**

| No. | Specified steel sheet | Baking conditions | | Etching resist coating property evaluation results | | | | | | | Remarks |
|---|---|---|---|---|---|---|---|---|---|---|---|
| | | Steel sheet maximum arrival temperature (°C) | Drying time (s) | Coating weight (g/m²) | Surface insulation resistance coefficient | Pencil hardness | Adhesion | Scratch resistance | Resist property | Removability | |
| 1 | secondary recrystallization annealed steel sheet | 170 | 20 | 6.5 | A | 3H | A | B | A | A | Example |
| 2 | secondary recrystallization annealed steel sheet | 170 | 20 | 6.5 | A | 3H | A | B | B | A | Example |
| 3 | secondary recrystallization annealed steel sheet | 170 | 20 | 6.5 | A | 7H | A | B | A | A | Example |
| 4 | secondary recrystallization annealed steel sheet | 170 | 20 | 6.5 | A | 8H | B | A | A | B | Example |
| 5 | secondary recrystallization annealed steel sheet | 170 | 20 | 6.5 | B | 3H | A | B | B | B | Example |
| 6 | secondary recrystallization annealed steel sheet | 170 | 20 | 6.5 | A | 3H | B | B | A | B | Example |
| 7 | secondary recrystallization annealed steel sheet | 170 | 20 | 6.5 | A | 3H | A | B | A | A | Example |
| 8 | secondary recrystallization annealed steel sheet | 120 | 20 | 6.5 | A | 3H | B | C | C | A | Example |
| 9 | secondary recrystallization annealed steel sheet | 350 | 20 | 6.5 | A | 3H | B | B | A | A | Example |
| 10 | secondary recrystallization annealed steel sheet | 170 | 20 | 0.5 | B | 3H | A | B | C | A | Example |
| 11 | secondary recrystallization annealed steel sheet | 170 | 20 | 10.0 | A | 3H | A | B | A | A | Example |
| 12 | secondary recrystallization annealed steel sheet | 170 | 20 | 20.0 | A | 3H | A | B | A | A | Example |
| 13 | secondary recrystallization annealed steel sheet | 170 | 20 | 6.5 | A | 9H | F | A | B | F | Comparative Example |
| 14 | secondary recrystallization annealed steel sheet | 170 | 20 | 6.5 | A | less than H | F | F | F | A | Comparative Example |
| 15 | secondary recrystallization annealed steel sheet | 170 | 20 | 6.5 | A | 9H | F | A | A | F | Comparative Example |
| 16 | secondary recrystallization annealed steel sheet | 170 | 20 | 6.5 | F | 3H | A | B | F | B | Comparative Example |
| 17 | secondary recrystallization annealed steel sheet | 170 | 20 | 6.5 | A | 9H | F | B | F | A | Comparative Example |
| 18 | secondary recrystallization annealed steel sheet | 170 | 20 | 6.5 | F | 3H | F | B | F | A | Comparative Example |
| 19 | final cold-rolled sheet | 170 | 20 | 6.5 | A | 3H | A | B | A | A | Example |
| 20 | final cold-rolled sheet | 170 | 20 | 6.5 | A | 7H | A | B | A | A | Example |
| 21 | primary recrystallization annealed steel sheet | 170 | 20 | 6.5 | A | 3H | A | B | A | A | Example |
| 22 | primary recrystallization annealed steel sheet | 170 | 20 | 6.5 | A | 7H | A | B | A | A | Example |

| | | | | | | | | | | | |
|---|---|---|---|---|---|---|---|---|---|---|---|
| Underlining indicates a "fail" result for an etching resist coating property evaluation. | | | | | | | | | | | |

### <Coating weight>

The coating weight of the etching resist coating after the baking treatment was measured by a gravimetric method. Specifically, only the etching resist coating was dissolved and removed from the etching resist control specified steel sheet using a heated potassium hydroxide solution, and the change in weight of the specified steel sheet before and after dissolution and removal was measured. The coating weight was calculated by dividing the measured weight change by the area of one side of the specified steel sheet.

### <Surface insulation resistance coefficient>

The surface insulation resistance coefficient of the etching resist coated grain-oriented electrical steel sheet was measured by the method specified in Japanese Industrial Standard JIS C 2550-4. The voltage between the contact electrodes was 0.5 V and the electrode force of the contact electrodes was 2 N/mm², measurements were taken at 10 points, and an average value was calculated. The surface insulation resistance coefficient was evaluated according to the following evaluation criteria. An evaluation of A or B was considered a pass, and an F was considered a fail.

### (Evaluation criteria)

A: 50 Ω·cm²/sheet or more
B: 20 Ω·cm²/sheet or more and less than 50 Ω·cm²/sheet
F: less than 20 Ω·cm²/sheet

### <Pencil hardness>

The pencil hardness of the etching resist coating of the etching resist coated grain-oriented electrical steel sheet was measured by the method specified in Japanese Industrial Standard JIS K 5600-5-4. A pencil (Uni, produced by Mitsubishi Pencil Co., Ltd.) having a hardness from H to 9H was prepared, and the pencil core was pressed against the etching resist coating 3 of the etching resist coated grain-oriented electrical steel sheet 1 at an angle of 45° with a load of 750 g, and moved across the etching resist coating 3 over a distance of 7 mm or more, three times. After the test, the surface of the etching resist coating 3 was visually inspected, and the test was repeated with increasing hardness until at least two scratches of 3 mm or more were formed. The hardness of the hardest pencil that did not cause any scratches was considered to be the pencil hardness of the etching resist coating 3. When a scratch occurred with a pencil having a hardness of H, the pencil hardness was considered to be "less than H".

### <Adhesion>

The etching resist coated grain-oriented electrical steel sheet was cut into a size of 30 mm in width and 50 mm in length, and a cellophane adhesive tape having a width of 24 mm and a length of 50 mm was attached to the surface after cutting on which the etching resist coating had been formed (test surface). Next, the etching resist coated grain-oriented electrical steel sheet was bent 180° using a round bar with a diameter of 5 mm with the test surface as the compression side, and then the cellophane adhesive tape was peeled off, and the area ratio of the etching resist coating that adhered to the cellophane adhesive tape and peeled off was calculated, and the adhesion was evaluated according to the following criteria. An evaluation of A or B was considered a pass, and an F was considered a fail.

### (Evaluation criteria)

A: area ratio was 5.0 % or less
B: area ratio was greater than 5.0 % and 10 % or less
F: area ratio was greater than 10 %

### <Scratch resistance>

The etching resist coated grain-oriented electrical steel sheet was cut to a size of 100 mm in width and 200 mm in length, and two pieces were prepared for each case. For each pair of two pieces of etching resist coated grain-oriented electrical steel sheet, the test surfaces on which the etching resist coating was formed were overlapped and slid in the longitudinal direction at a relative speed of 2 cm/s for 10 s while applying a pressure of 196 kPa (2 kgf/cm²) in the normal direction of the test surfaces. Next, scratches on the test surfaces were visually observed to calculate a scratch occurrence area ratio, and the scratch resistance was evaluated according to the following criteria. A rating of A, B, or C was considered a pass, and an F was considered a fail.

### (Evaluation criteria)

A: almost no scratching was observed
B: some scratching was observed
C: scratching was clearly visible
F: a scratch that exposed the steel substrate was observed

### <Resist property>

The etching resist coated grain-oriented electrical steel sheet was cut to a size of 30 mm in width and 250 mm in length and subjected to electrolytic etching. The appearance of the etching resist coating after electrolytic etching was visually observed, and the area ratio of portions where discoloration was observed was calculated to evaluate the resist property. As the electrolyte solution used for the electrolytic etching, a 20 % aqueous NaCl solution was used. The electrolytic etching conditions were an electrolyte solution temperature of 25 °C, a current density of 8 A/dm², and a current application time of 3 min. The resist property was evaluated according to the following criteria. An evaluation of A or B was considered a pass, and an F was considered a fail.

### (Evaluation criteria)

A: the area ratio of discolored portions was 0.0 % or less
B: the area ratio of discolored portions was greater than 0.0 % and 5.0 % or less
F: the area ratio of discolored portions was greater than 5.0 %

### <Removability>

The etching resist coated grain-oriented electrical steel sheet for evaluating the resist property was immersed in a 25 % sodium hydroxide aqueous solution at 50 °C for 10 s, then taken out and washed with water to remove the etching resist coating. After the etching resist coating was removed, the test surface of the grain-oriented electrical steel sheet was visually observed, and the area ratio of a portion where the etching resist coating had been removed was calculated to evaluate the removability. The removability was evaluated according to the following criteria. An evaluation of A or B was considered a pass, and an F was considered a fail.

### (Evaluation criteria)

A: the area ratio of the removed portion was 100 %
B: the area ratio of the removed portion was 90 % or more but less than 100 %
F: the area ratio of the removed portion was less than 90 %

According to the evaluation results in Table 3, the etching resist coatings of the etching resist coated grain-oriented electrical steel sheets No. 1 to 12 and No. 19 to 22 according to the present disclosure passed all evaluation criteria in the property evaluation results. In contrast, the etching resist coatings of the etching resist coated grain-oriented electrical steel sheets No. 13 to 18, which did not satisfy the properties specified in the present disclosure in terms of surface insulation resistance coefficient or pencil hardness, failed to pass at least one evaluation criteria in the property evaluation results.

### REFERENCE SIGNS LIST

- 1: etching resist coated grain-oriented electrical steel sheet
- 2: grain-oriented electrical steel sheet
- 2a: groove
- 3: etching resist coating
- 4: non-coated region

## Claims

1. A method of producing a grain-oriented electrical steel sheet, the method comprising:
a process of hot rolling a steel slab to obtain a hot-rolled steel sheet;
an optional process of hot-rolled sheet annealing the hot-rolled steel sheet to obtain a hot-rolled annealed steel sheet;
a process of cold rolling the hot-rolled steel sheet or the hot-rolled annealed steel sheet once or two or more times with intermediate annealing therebetween to obtain a cold-rolled steel sheet;
a process of primary recrystallization annealing the cold-rolled steel sheet to obtain a primary recrystallization annealed steel sheet;
a process of secondary recrystallization annealing the primary recrystallization annealed steel sheet to obtain a secondary recrystallization annealed steel sheet;
a process of applying a coating agent for etching resist coating formation to a surface of a specified steel sheet selected from the group consisting of the hot-rolled steel sheet, the hot-rolled annealed steel sheet, the cold-rolled steel sheet, the primary recrystallization annealed steel sheet, and the secondary recrystallization annealed steel sheet, and at that time, leaving a plurality of non-coated regions where the coating agent for etching resist coating formation is not applied linearly along a direction intersecting the rolling direction of the specified steel sheet;
a subsequent process of applying a baking treatment to the specified steel sheet to bake the coating agent for etching resist coating formation to form an etching resist coating; and
a subsequent process of applying an etching treatment to the specified steel sheet to form grooves on the surface of the specified steel sheet in the non-coated regions, wherein
the etching resist coating has a surface insulation resistance coefficient of 20 Ω·cm²/sheet or more and a pencil hardness of H or more and 8H or less.

2. The method of producing a grain-oriented electrical steel sheet according to claim 1, further comprising a process of removing the etching resist coating after the etching treatment.

3. An etching resist coated grain-oriented electrical steel sheet comprising:
a grain-oriented electrical steel sheet;
an etching resist coating formed on at least one surface of the grain-oriented electrical steel sheet;
a plurality of non-coated regions where the etching resist coating is not applied, the non-coated regions being linear along a direction intersecting the rolling direction of the grain-oriented electrical steel sheet; and
grooves formed on a surface of the grain-oriented electrical steel sheet in the non-coated regions, wherein
the etching resist coating has a surface insulation resistance coefficient of 20 Ω·cm²/sheet or more and a pencil hardness of H or more and 8H or less.
